Europäisches Patentamt

(19) European Patent Office

Office européen des brevets

(11) **EP 0 931 105 B1**

(12) **EUROPÄISCHE PATENTSCHRIFT**

(45) Veröffentlichungstag und Bekanntmachung des Hinweises auf die Patenterteilung:
**10.05.2000 Patentblatt 2000/19**

(21) Anmeldenummer: **97943883.5**

(22) Anmeldetag: **23.09.1997**

(51) Int Cl.$^7$: **C08G 65/10**, C08G 65/20, B01J 23/24

(86) Internationale Anmeldenummer:
**PCT/EP97/05204**

(87) Internationale Veröffentlichungsnummer:
**WO 98/15589 (16.04.1998 Gazette 1998/15)**

(54) **VERFAHREN ZUR HERSTELLUNG VON POLYTETRAHYDROFURAN UND POLYTETRAHYDROFURANDERIVATEN**

PROCESS FOR PREPARING POLYTETRAHYDROFURAN AND DERIVATIVES THEREOF

PROCEDE DE PREPARATION DE POLYTETRAHYDROFURANE ET DE DERIVES DE POLYTETRAHYDROFURANE

(84) Benannte Vertragsstaaten:
**AT BE CH DE ES FR GB IE IT LI LU NL SE**

(30) Priorität: **09.10.1996 DE 19641481**

(43) Veröffentlichungstag der Anmeldung:
**28.07.1999 Patentblatt 1999/30**

(73) Patentinhaber: **BASF AKTIENGESELLSCHAFT**
**67056 Ludwigshafen (DE)**

(72) Erfinder:
• **SIGWART, Christoph**
**69198 Schriesheim (DE)**
• **ELLER, Karsten**
**D-67061 Ludwigshafen (DE)**

• **BECKER, Rainer**
**D-67098 Bad Dürkheim (DE)**
• **PLITZKO, Klaus-Dieter**
**Boonton, New Jersey 07005 (US)**
• **FISCHER, Rolf**
**D-69121 Heidelberg (DE)**
• **STEIN, Frank**
**D-67098 Bad Dürkheim (DE)**
• **MÜLLER, Ulrich**
**67435 Neustadt-Musbach (DE)**
• **HESSE, Michael**
**D-67549 Worms (DE)**

(56) Entgegenhaltungen:
**DE-A- 4 433 606          US-A- 4 485 005**

**Beschreibung**

Die vorliegende Erfindung betrifft ein verbessertes Verfahren zur Herstellung von Polytetrahydrofuran, Copolymeren aus Tetrahydrofuran und 2-Butin-1,4-diol, Diestern dieser Polymere mit $C_2$- bis $C_{20}$-Monocarbonsäuren oder Monoestern dieser Polymere mit $C_1$- bis $C_{10}$-Monocarbonsäuren durch die Polymerisation von Tetrahydrofuran in Gegenwart eines der Telogene Wasser, 1,4-Butandiol, 2-Butin-1,4-diol, Polytetrahydrofuran eines Molekulargewichts von 200 bis 700 Dalton, einer $C_1$- bis $C_{10}$- Monocarbonsäure oder eines Carbonsäureanhydrids aus $C_2$- bis $C_{20}$- Monocarbonsäuren oder Gemischen dieser Telogene an einem heterogenen Trägerkatalysator, der eine katalytisch aktive Menge einer sauerstoffhaltigen Molybdän- und/ oder Wolframverbindung auf einem oxidischen Trägermaterial enthält und der nach Aufbringung der Vorläuferverbindungen der sauerstoffhaltigen Molybdän- und/oder Wolframverbindungen auf den Trägermaterial-Vorläufer bei Temperaturen von 500°C bis 1000°C kalziniert worden ist.

Polytetrahydrofuran ("PTHF"), auch Polyoxybutylenglykol genannt, ist in der Kunststoff- und Kunstfaserindustrie ein vielseitiges Zwischenprodukt und dient unter anderem zur Herstellung von Polyurethan-, Polyester- und Polyamid-Elastomeren, zu deren Herstellung es als Diolkomponente eingesetzt wird. Daneben ist es wie auch manche seiner Derivate in vielen Anwendungsfällen ein wertvoller Hilfsstoff, so zum Beispiel als Dispergiermittel oder etwa beim Entfärben ("Deinken") von Altpapier.

PTHF wird technisch vorteilhafterweise hergestellt durch Polymerisation von Tetrahydrofuran an geeigneten Katalysatoren in Gegenwart von Reagentien, deren Zugabe die Steuerung der Kettenlänge der Polymerketten und so die Einstellung des mittleren Molekulargewichts auf den gewünschten Wert ermöglicht (Kettenabbruchreagentien oder "Telogene"). Die Steuerung erfolgt dabei durch Wahl von Art und Menge des Telogens. Durch Wahl geeigneter Telogene können zusätzlich funktionelle Gruppen an ein Ende oder beide Enden der Polymerkette eingeführt werden. So können zum Beispiel durch Verwendung von Carbonsäuren oder Carbonsäureanhydriden als Telogene die Mono- oder Diester des PTHFs hergestellt werden. Andere Telogene, zum Beispiel solche mit zwei Hydroxigruppen wie 1,4-Butandiol, 2-Butin-1,4-diol oder niedermolekulares PTHF wirken nicht nur als Kettenabbruchreagenzien, sondern werden auch in die wachsende Polymerisatkette des PTHFs eingebaut. Auf diese Weise kann das PTHF auch chemisch modifiziert werden. Ein Beispiel dafür ist die Verwendung des Telogens 2-Butin-1,4-diol, dessen Zugabe zum Vorhandensein eines Anteils an C≡C-Dreifachbindungen in den Polymerketten des PTHFs führt. Derartig modifiziertes PTHF kann durch die Reaktivität dieser Dreifachbindungen an diesen Stellen chemisch weiter veredelt werden, zum Beispiel durch Hydrierung der Dreifach- zu Doppelbindungen, durch anschließende Anpolymerisation anderer Monomere ("Propfen") zur Einstellung der Eigenschaften des Polymers, Vernetzung zur Bildung von Polymeren mit vergleichsweise starrer Struktur, oder andere gängige Maßnahmen der Polymerchemie. Die komplette Hydrierung der vorhandenen Dreifachbindungen ist ebenfalls möglich und führt im allgemeinen zu PTHF mit einer besonders niedrigen Farbzahl.

DE-A 44 33 606 beschreibt ein Verfahren zur Herstellung von PTHF, PTHF-Diestern von $C_2$- bis $C_{20}$-Monocarbonsäuren oder PTHF-Monoestern von $C_1$- bis $C_{10}$-Monocarbonsäuren durch die Polymerisation von Tetrahydrofuran an einem heterogenen Katalysator in Gegenwart eines der Telogene Wasser, 1,4-Butandiol, PTHF eines Molekulargewichts von 200 bis 700 Dalton, einer $C_1$- bis $C_{10}$-Monocarbonsäure oder eines Carbonsäureanhydrids aus $C_2$- bis $C_{20}$-Monocarbonsäuren oder Gemischen dieser Telogene, wobei der Katalysator ein Trägerkatalysator ist, der eine katalytisch aktive Menge einer Sauerstoffhaltigen Wolfram- oder Molybdänverbindung oder Gemische dieser Verbindungen auf einem oxidischen Trägermaterial enthält und der nach Aufbringung der Vorläuferverbindungen der sauerstoffhaltigen Molybdän- und/oder Wolframverbindungen auf den Trägermaterial-Vorläufer bei Temperaturen von 500°C bis 1000°c kalziniert worden ist.

WO 96/09335 lehrt ein Verfahren zur Herstellung von PTHF oder PTHF-Monoestern von $C_1$- bis $C_{10}$-Monocarbonsäuren durch die Polymerisation von Tetrahydrofuran an einem heterogenen Katalysator in Gegenwart eines der Telogene Wasser, 1,4-Butandiol, PTHF eines Molekulargewichts von 200 bis 700 Dalton, einer $C_1$- bis $C_{10}$-Monocarbonsäure oder Gemischen dieser Telogene, wobei der Katalysator ein Trägerkatalysator ist, der eine katalytisch aktive Menge einer sauerstoffhaltigen Wolfram- oder Molybdänverbindung oder Gemische dieser Verbindungen auf einem oxidischen Trägermaterial enthält und der nach Aufbringung der Vorläuferverbindungen der sauerstoffhaltigen Molybdän- und/oder Wolframverbindungen auf den Trägermaterialvorläufer bei Temperaturen von 500°C bis 1000°C kalziniert worden ist.

Da die Wirtschaftlichkeit eines heterogen katalysierten PTHF-Verfahrens entscheidend von der Produktivität des Katalysators abhängt, lag der vorliegenden Erfindung die Aufgabe zugrunde, die Katalysatoraktivität der in DE 44 33 606 oder WO 96/09335 beschriebenen Katalysatoren bei der THF-Polymerisation zu steigern, um höhere Polymer-Ausbeuten und/oder Raum-Zeit-Ausbeuten zu erreichen.

Dementsprechend wurde ein verbessertes Verfahren zur Herstellung von Polytetrahydrofuran, Copolymeren aus Tetrahydrofuran und 2-Butin-1,4-diol, Diestern dieser Polymere mit $C_2$- bis $C_{20}$-Monocarbonsäuren oder Monoestern dieser Polymere mit $C_1$-bis $C_{10}$-Monocarbonsäuren durch die Polymerisation von Tetrahydrofuran in Gegenwart eines der Telogene Wasser, 1,4-Butandiol, 2-Butin-1, 4-diol, Polytetrahydrofuran eines Molekulargewichts von 200 bis 700 Dalton, einer $C_1$- bis $C_{10}$-Monocarbonsäure oder eines Carbonsäureanhydrids aus $C_2$- bis $C_{20}$-Monocarbonsäuren

oder Gemischen dieser Telogene an einem heterogenen Trägerkatalysator, der eine katalytisch aktive Menge einer sauerstoffhaltigen Molybdän- und/oder Wolframverbindung auf einem oxidischen Trägermaterial enthält und der nach Aufbringung der Vorläuferverbindungen der sauerstoffhaltigen Molybdän- und/oder Wolframverbindungen auf den Trägermaterial-Vorläufer bei Temperaturen von 500°C bis 1000°C kalziniert worden ist, gefunden, das dadurch gekennzeichnet ist, daß man den Katalysator vor seinem Einsatz als Polymerisationskatalysator durch Behandlung mit einem Reduktionsmittel aktiviert.

Als Polymerisationskatalysatoren werden im erfindungsgemäßen Verfahren Trägerkatalysatoren aus einem oxidischen Trägermaterial verwendet, die sauerstoffhaltige Molybdän-oder Wolframverbindungen oder Gemische solcher Verbindungen als katalytisch aktive Verbindungen enthalten und die weiterhin gewünschtenfalls zusätzlich mit Sulfat- und/oder Phosphat-Gruppen dotiert sein können. Zur Überführung in ihre katalytisch aktive Form werden die Trägerkatalysatoren nach Aufbringung der Vorläuferverbindungen der katalytisch aktiven, sauerstoffhaltigen Molybdän- und/oder Wolframverbindungen auf das Trägermaterial einer Kalzinierung bei 500°C bis 1000°C unterworfen, wobei das Trägermaterial und die Vorläuferverbindung eine Umwandlung zum Katalysator erfahren.

Die Katalysatoren, ihre Herstellung und ihre Verwendung in den Verfahren zur Herstellung von Polytetrahydrofuran, Polytetrahydrofurandiestern von $C_2$- bis $C_{20}$-Monocarbonsäuren der Polytetrahydrofuranmonoestern von $C_1$- bis $C_{10}$-Monocarbonsäuren, sind in DE 44 33 606 oder WO 96/09335, auf die hiermit ausdrücklich Bezug genommen wird, im einzelnen beschrieben. Die Verwendung des Telogens 2-Butin-1,4-diol ist im einzelnen in den deutschen Patentanmeldungen Nr. 19507399.1 (= PCT-Anmeldung PCT/EP96/00702) und Nr. 19527532.2 (= PCT-Anmeldung PCT/EP96/03297) beschrieben.

Gemäß der vorliegenden Erfindung wird die Aktivität der Katalysatoren durch Behandlung mit einem Reduktionsmittel nach der Kalzinierung und vor dem Einsatz als Polymerisationskatalysatoren gesteigert. Das Reduktionsmittel wird dabei zumindest teilweise zu einem Oxidationsprodukt oder auch einem Gemisch von Oxidationsprodukten oxidiert.

Als Reduktionsmittel sind prinzipiell alle Reduktionsmittel geeignet, die keine oder lediglich in der Polymerisation von Tetrahydrofuran inerte und die Verwendung der Polymerisationsprodukte nicht beeinträchtigende Rückstände auf den mit ihnen behandelten Katalysatoren hinterlassen.

Im allgemeinen ist es vorteilhaft, Reduktionsmittel zu verwenden, die sich während der Reduktion des Katalysators ausschließlich in gegenüber dem Katalysator inerte und gasförmig entweichende Oxidationsprodukte umwandeln. Es ist aber in ebenso vorteilhafter Weise möglich, Reduktionsmittel zu verwenden, deren Oxidationsprodukte zwar nicht gasförmig sind, aber die mit einem in der Reduktion verwendeten Lösungs- oder Suspensionsmittel oder mit dem flüssigen Reduktionsmittel vom Katalysator enternt werden können und diesem gegenüber inert sind. Es ist prinzipiell auch möglich, Reduktionsmittel zu verwenden, deren Oxidationsprodukte nicht vom Katalysator abgetrennt werden können, sofern diese Oxidationsprodukte gegenüber dem Katalysator und den Komponenten der Polymerisationsreaktion inert sind. Dieses Vorgehen kann sogar vorteilhaft sein, insbesondere dann, wenn die Oxdationsprodukte als Promotor des Katalysators wirken, also die Polymerisationsreaktion fördern, oder der Vorteil eines eingesparten Verfahrensschritts, nämlich dem der Entfernung der Oxidationsprodukte, den möglichen Nachteil eines gewissen Anteils an inertem Volumen im Reaktor aufwiegt.

Als Reduktionsmittel können zum Beispiel organische Verbindungen, die gegenüber den Katalysatoren in ihrer kalzinierten Form reduzierend wirken, eingesetzt werden, wie etwa Alkohole, Aldehyde, Carbonsäuren oder Kohlenhydrate, wobei bi- oder polyfunktionelle Verbindungen wie etwa Hydroxisäuren, Hydroxialdehyde, Polyalkohole, Di- oder Polyaldehyde oder Di- oder Polysäuren oder Salze organischer Reduktionsmittel, hierunter bevorzugterweise die Ammoniumsalze, ebenfalls eingesetzt werden können.

Beispiele für erfindungsgemäß einsetzbare organische Reduktionsmittel sind geradkettige oder verzweigte Aldehyde mit einem bis zehn Kohlenstoffatomen wie Formaldehyd oder Acetaldehyd, Propionaldehyd, Butyraldehyd, iso-Butyraldehyd oder Glyoxal, geradkettige, verzweigte oder cyclische Mono- oder Dicarbonsäuren oder deren Salze wie etwa Ameisensäure, Ammoniumformiat, Essigsäure, Propionsäure, Buttersäure, iso-Buttersäure, Oxalsäure, Milchsäure, Benzoesäure, Citronensäure oder Ascorbinsäure, geradkettige, verzweigte oder cyclische Alkohole oder Kohlenhydrate wie Methanol, Ethanol, Propanol, iso-Propanol oder Aldosen wie etwa Glucose.

Beispiele für erfindungsgemäß einsetzbare anorganische Reduktionsmittel sind Wasserstoff enthaltende Verbindungen wie Hydride, zum Beispiel Alkalitetrahydridoboranate wie Natriumtetrahydridoboranat, 9-Borabicyclononan, Catecholboran, eine Lösung von Diboran in Tetrahydrofuran oder in anderen Ethern, Alkalitetrahydridoaluminate wie etwa Lithiumtetrahydridoaluminat, oder einfache binäre Hydride wie die Hydride der Alkali- oder Erdalkalimetalle, etwa Lithiumhydrid, Natriumhydrid oder Calciumhydrid.

Es ist jedoch genauso möglich, Verbindungen ohne hydridischen Wasserstoff, aber mit reduzierender Wirkung zu verwenden. Beispiele für solche Reduktionsmittel sind Phosphite oder Hypophosphite wie Ammoniumphosphit oder Ammoniumhypophosphit oder Sulfite oder Hydrogensulfite wie Ammoniumsulfit oder Ammoniumhydrogensulfit. In diesem Fall werden bei der Reduktionsbehandlung automatisch phosphat- oder sulfatdotierte Katalysatoren erhalten. Diese Vorgehensweise ist jedoch nicht zwingend notwendig, um sulfat- oder phosphatdotierte Katalysatoren herzustellen, diese können vielmehr auch durch reduzierende Behandlung eines sulfat- oder phosphatdotierten Katalysators hergestellt werden. Im allgemeinen wird die optimale Menge an Phosphat- oder Sulfatdotierung des Katalysators nicht genau diejenige Menge sein, die sich bei Einsatz einer für die Reduktion optimalen Menge an Phosphiten, Hypophosphiten, Sulfiten oder Hydrogensulfiten einstellt. In diesen Fällen ist entweder durch Sulfat- oder Phosphatzugabe die Menge dieser Dotierstoffe auf dem Katalysator auf den gewünschten Wert anzuheben oder durch Nachydrierung mit einem anderen Reduktionsmittel die Reduktion des Katalysators bis zum gewünschten Maß fortzusetzen.

Als bevorzugte Reduktionsmittel werden wasserstoffhaltige Gase wie reiner Wasserstoff oder Wasserstoff im Gemisch mit anderen Gasen eingesetzt. Besonders bevorzugt ist die Verwendung von Wasserstoff entweder in reiner Form oder mit einem Inertgas wie zum Beispiel Stickstoff oder Argon verdünnt. Sehr gut geeignet sind zum Beispiel Gemische aus Stickstoff und Wasserstoff. Solche Gemische können etwa bis zu 60 Vol.-% Wasserstoff in Stickstoff enthalten, Wasserstoffgehalte von jeweils bis zu 40 Vol.-% oder 20 Vol.-% sind ebenfalls geeignet. Im allgemeinen reicht jedoch ein Wasserstoffgehalt von bis zu 10 Vol. -% aus. Der Gehalt an Wasserstoff kann auch im Lauf der Reduktionsreaktion sukzessive erhöht werden, um eine übermäßig stark exotherme Reaktion zu Beginn zu vermeiden. So kann beispielsweise zu Beginn ein Inertgas/Wasserstoff-Volumenverhältnis von ungefähr 99 : 1 (oder sogar noch höher, etwa 99,5 : 0,5) verwendet werden, das im Laufe der Reduktion im allgemeinen erniedrigt wird, da ansonsten die erforderlichen Reduktionsdauern ansteigen. Es können nacheinander oder direkt Verhältnisse von zum Beispiel 98 : 2, 95 : 5, 90 : 10, 80 : 20, 60 : 40, 50 : 50 oder noch niedrigere Werte, bis hin zu reinem Wasserstoff, eingestellt werden, wobei auch ein feiner abgestufter Übergang zwischen den Gemischen mit unterschiedlicher Wasserstoffkonzentration bis hin zu einem kontinuierlichen Ansteigen des Wasserstoffanteils angewandt werden kann. Die Geschwindigkeit der Erhöhung des Wasserstoffanteils und der Endwert dieses Wasserstoffanteils werden vorteilhafterweise gemäß der bei der Reduktion freiwerdenden Wärme derart eingestellt, daß eine übermäßige Wärmeentwicklung vermieden wird. Eine übermäßige Wärmeentwicklung ist beispielsweise dann gegeben, wenn die freiwerdende Reaktionswärme durch das Kühlsystem des Reduktionsreaktors nicht mehr abgeführt werden kann. Eine übermäßige Wärmeentwicklung ist beispielsweise auch dann gegeben, wenn der Katalysator durch freiwerdende Reaktionswärme Temperaturen erreicht, die seinen Eigenschaften in der Polymerisation abträglich sind, etwa, wenn der Katalysator schmilzt, sintert oder sich sonst zumindest teilweise thermisch verändert, etwa durch thermische Zersetzung oder Verdampfen von organischen Bestandteilen wie etwa Extrusions- oder Tablettierungs-Hilfsstoffen.

Die Behandlung des kalzinierten Katalysators mit dem Reduktionsmittel erfolgt im allgemeinen bei Temperaturen von 20°C bis 500°C. Wenn die Reduktion mit Wasserstoff enthaltenden Gasen durchgeführt wird, liegt die bevorzugte Temperatur im Bereich von 100°C bis 400°C. Wird die Reduktion jedoch mit festen, flüssigen oder gelösten Reduktionsmitteln durchgeführt, so liegt die bevorzugte Reduktionstemperatur im Bereich von 20 bis 200°C.

Wenn die Reduktion nicht durch Behandlung des Katalysators mit gasförmigen Stoffen durchgeführt wird, ist der verwendete Druck im allgemeinen ohne Bedeutung. Wenn in diesem Fall sich das Reduktionsmittel im Laufe der Reduktion des Katalysators ganz oder teilweise in gasförmige Oxidationsprodukte umwandelt, sollte der verwendete Reaktionsdruck jedoch die Bildung dieser gasförmigen Oxidationsprodukte nicht behindern, ein nicht zu hoher Druck ist also im allgemeinen vorteilhaft. Er kann beispielsweise zwischen 0,1 und 5 bar (absolut) betragen. Bevorzugt wird die Reduktion unter Normaldruck durchgeführt. Wird die Reduktion mit gasförmigen Reduktionsmitteln durchgeführt, so kann sie bei Normaldruck oder erhöhtem Druck, zum Beispiel zwischen einem und 300 bar (absolut) und in bevorzugter Weise zwischen einem und 50 bar (absolut) erfolgen.

Die Reduktionsdauer beträgt im allgemeinen 10 Minuten bis zu 100 Stunden, in bevorzugter Weise 30 Minuten bis zu 50 Stunden und besonders bevorzugt von 1 Stunde bis zu 24 Stunden.

Das Reduktionsmittel wird im allgemeinen in einer Menge von 0,01 bis 100 Mol, insbesondere 0,1 bis 50 Mol je Gramm des kalzinierten Katalysators und in bevorzugter Weise in einer Menge von 0,1 bis 10 Mol je Gramm des kalzinierten Katalysators eingesetzt.

Die für eine gegebene Zusammensetzung des kalzinierten Katalysators optimalen Bedingungen für die Reduktionstemperatur, die Reduktionsdauer und die Menge des Reduktionsmittels müssen im Einzelfall im Rahmen der angegebenen allgemeinen Bereiche empirisch durch routinemäßige Reduktionsversuche und Reaktionstests festgelegt werden, da sie vom Gehalt des Katalysators an Aktivkomponente, der Art der Aktivkomponente, der Art des Trägers und der Art und Menge der Dotierung abhängen. Im allgemeinen ist die Reduktion beendet, wenn die zu Beginn der Reduktion üblicherweise auftretende Wärmeentwicklung im wesentlichen abgeklungen ist, wobei eine Nachreduktionszeit von 5 Minuten bis 5 Stunden, vorteilhafterweise von 10 Minuten bis 2 Stunden, angeschlossen werden kann.

Die Reduktion kann durch Behandlung des Katalysators mit einer Flüssigkeit, die das Reduktionsmittel enthält, durchgeführt werden. Zum Beispiel kann der Katalysator mit einer Lösung oder Suspension des Reduktionsmittels in einem geeigneten Lösungsmittel oder Suspensionsmittel behandelt werden. Die Wahl dieses Lösungsmittels unterliegt den Rahmenbedingungen, daß der Katalysator darin praktisch unlöslich sein muß und daß das Reduktionsmittel darin ausreichend löslich sein muß. Die Wahl des Suspensionsmittels unterliegt den Rahmenbedingungen, daß der Katalysator darin praktisch unlöslich sein muß und daß das Suspensionsmittel praktisch inert gegenüber dem Reduktionsmittel sein muß. Der Übergang zwischen Lösung und Suspension ist fließend, da auch ein Teil des Reduktionsmittels gelöst und ein weiterer Teil ungelöst suspendiert vorliegen kann. Die Wahl des Lösungs- oder Suspensionsmittels kann routinemäßig anhand einer Löslichkeitstabelle erfolgen. Beispiele für Lösungs- oder Suspensionsmittel sind Wasser oder die Alkohole mit einem bis zehn Kohlenstoffatomen wie Methanol, Ethanol, Propanol, iso-Propanol, Butanol, aliphatische, verzweigte oder unverzweigte oder cyclische Ether wie Diethylether, Di-n-butylether, Methyl-tert.-butylether, Ethyl-tert.-butylether, Mono-, Di- und Tri-Ethylenglykoldimethylether oder Tetrahydrofuran oder aliphatische, verzweigte oder unverzweigte oder cyclische oder aromatische Kohlenwasserstoffe mit fünf bis zehn Kohlenstoffatomen wie Pentan, Hexan, Benzol, Toluol, Xylol, Tetralin oder Decalin.

Die Reduktion kann gleichermaßen durch Behandlung des Katalysators mit einem flüssigen Reduktionsmittel ohne Zugabe eines Lösungsmittels durchgeführt werden.

Zu dieser Reduktionsbehandlung des Katalysators mit einem in flüssiger Phase vorliegenden Reduktionsmittel kann der Katalysator fest in einem Reaktor angeordnet und von Flüssigkeit umspült sein oder in Suspension vorliegen. Letztere Verfahrensweise kann zum Beispiel dann vorteilhaft sein, wenn der Katalysator in Form von Pulver vorliegt und erst nach dem Reduktionsschritt zu Formkörpern verformt wird. Als Reaktoren sind beispielsweise Rührkessel oder Schlaufenreaktoren mit internem oder externem Rücklauf geeignet. Vorteilhafterweise wird die Reduktion direkt im Polymerisationsreaktor durchgeführt.

Die Reduktion kann auch durch Behandlung des festen Katalysators mit einem festen Reduktionsmittel durchgeführt werden. Zum Beispiel kann kalziniertes Katalysatorpulver mit einem festen Reduktionsmittel vermischt und verformt werden und durch Erhitzung auf Reduktionstemperatur reduziert werden.

Nach der Reduktion des Katalysators mit einem in flüssiger oder fester Phase vorliegenden Reduktionsmittel kann ein Waschschritt durchgeführt werden, um den Katalysator von Rückständen des Reduktionsmittels oder seiner Oxidationsprodukte zu reinigen. Dazu kann der Katalysator mit einem reinen Lösungsmittel, das in der Lage ist, die vom Katalysator zu entfernenden Rückstände der Reduktionsbehandlung zu lösen, analog zur Vorgehensweise bei der Reduktion, aufgeschlämmt oder von diesem Lösungsmittel umspült werden. Beispiele für verwendbare Lösungsmittel sind die oben genannten Lösungsmittel für die Reduktionsmittel. Es versteht sich dabei von selbst, daß zur Entfernung von oxidierten Rückständen eines Reduktionsmittels, die in dem Lösungsmittel, das für dieses Reduktionsmittel verwendet wurde, unlöslich sind, ein anderes Lösungsmittel für den Waschschritt verwendet werden muß. Die Wahl dieses Lösungsmittels unterliegt den Rahmenbedingungen, daß der Katalysator darin praktisch unlöslich sein muß und daß die zu entfernenden Rückstände darin ausreichend löslich sein müssen und kann routinemäßig anhand einer Löslichkeitstabelle erfolgen.

In bevorzugter Weise wird die Reduktion durch Behandlung des Katalysators mit einem gasförmigen Reduktionsmittel und in besonders bevorzugter Weise durch Behandlung des Katalysators mit einem Gemisch aus Wasserstoff und Stickstoff durchgeführt. Dazu wird der Katalysator in Form von Pulver oder Formkörpern vorteilhafterweise in einem Festbettreaktor angeordnet und das Katalysatorbett wird vom wasserstoffhaltigen Gasgemisch durchströmt. Der Reaktor verfügt über ein Temperaturregelsystem, das einerseits in der Lage ist, die bei der Reaktion freiwerdende Wärme abzuführen und andererseits die notwendige Reaktionstemperatur abführen kann. Nach der Hydrierung kann der Katalysator, wenn dies nicht schon vor der Hydrierung geschah, zu Formkörpern verformt werden.

Beispiele

Herstellung der Katalysatoren

Katalysator A [20 % $WO_3/TiO_2$]

Katalysator A wurde hergestellt durch Zugabe von 4400 g Titandioxid zu einer Lösung aus 850 g Wolframsäure in 4860 g 25%iger wäßriger $NH_3$-Lösung. Diese Mischung wurde 60 min geknetet und danach 12 h bei 120°C getrocknet. Das nach einer Siebung entstandene Pulver wurde tablettiert, die entstandenen Tabletten (7 x 7 x 3 mm) anschließend bei 650°C 2 h kalziniert. Der Katalysator hatte einen Wolframgehalt, berechnet als Wolframtrioxid, von 20 Gew.-%, bezogen auf das Gesamtgewicht des Katalysators.

Katalysator B

Katalysator B wurde aus Katalysator A hergestellt: 30 g Katalysator A wurden in einem Quarzrohr bei Normaldruck in einem Strom reinen Wasserstoffs (35 l/h) 30 h lang auf 300°C erhitzt und anschließend unter Stickstoff auf Raumtemperatur abgekühlt.

Katalysator C

Katalysator C wurde aus Katalysator A hergestellt: 50 g Katalysator A wurden in einem Quarzrohr bei Normaldruck in einem Strom reinen Wasserstoffs (35 l/h) 6 h lang auf 300°C erhitzt und anschließend unter Stickstoff auf Raumtemperatur abgekühlt.

Katalysator D (Vergleichskatalysator)

Katalysator D wurde aus Katalysator A hergestellt: 50 g Katalysator A wurden in einem Quarzrohr bei Normaldruck in einem Strom reinen Stickstoffs (35 l/h) 30 h lang auf 300°C erhitzt und anschließend unter Stickstoff auf Raumtemperatur abgekühlt.

Katalysator E

Katalysator E wurde hergestellt durch Zugabe von 6300 g Titandioxid zu einer Lösung aus 1275 g Wolframsäure in 7300 g 25%iger wäßriger NH$_3$-Lösung. Diese Mischung wurde 60 min geknetet und danach 12 h bei 120°C getrocknet. Das nach einer Siebung entstandene Pulver wurde tablettiert, die entstandenen Tabletten (3 x 3 mm) anschließend bei 690°C 2 h kalziniert. Der Katalysator hatte einen Wolframgehalt, berechnet als Wolframtrioxid, von 20 Gew.-%, bezogen auf das Gesamtgewicht des Katalysators.

Katalysator F

Katalysator F wurde aus Katalysator E hergestellt: 50 g Katalysator E wurden in einem Quarzrohr bei Normaldruck in einem Strom reinen Wasserstoffs (35 l/h) 12 h lang auf 300°C erhitzt und anschließend unter Argon auf Raumtemperatur abgekühlt.

Katalysator G

Katalysator G wurde hergestellt durch Zugabe von 200 g Titandioxid zu einer Lösung aus 53 g Wolframsäure in 200 g 25%iger wäßriger NH$_3$-Lösung. Diese Mischung wurde 150 min geknetet und danach 12 h bei 120°C getrocknet. Das nach einer Siebung entstandene Pulver wurde verstrangt, die entstandenen Stränge (2,5 mm) anschließend bei 675°C 2 h kalziniert. Der Katalysator hatte einen Wolframgehalt, berechnet als Wolframtrioxid, von 20 Gew.-%, bezogen auf das Gesamtgewicht des Katalysators.

Katalysator H

Katalysator H wurde aus Katalysator G hergestellt: 100 g Katalysator G wurden in einem Quarzrohr bei Normaldruck in einem Strom reinen Stickstoffs (40 l/h) 30 min lang auf 300°C erhitzt, anschließend wurden dem Stickstoffsstrom 4 l/h Wasserstoff zugemischt und der Katalysator 12 Stunden bei 300°C mit diesem Gasgemisch reduziert. Anschließend wurde er unter Stickstoff auf Raumtemperatur abgekühlt.

Katalysator I

Katalysator I wurde hergestellt durch Zugabe von 18 kg Zirkonhydroxid zu einer Lösung aus 4,25 kg Wolframsäure in 23,1 kg 25%iger NH$_3$-Lösung. Diese Mischung wurde 30 min geknetet und danach 11 h bei 120°C getrocknet. Das nach einer Siebung entstandene Pulver wurde tablettiert, die entstandenen Tabletten (3 x 3 mm) anschließend bei 675°C 4 h kalziniert. Der Katalysator hatte einen Wolframgehalt, berechnet als Wolframtrioxid, von 20 Gew.-%, bezogen auf das Gesamtgewicht des Katalysators.

Katalysator K

Katalysator K wurde aus Katalysator I hergestellt: 50 g Katalysator I wurden in einem Quarzrohr bei Normaldruck in einem Strom reinen Wasserstoffs (35 l/h) 29 h lang auf 300°C erhitzt und anschließend unter Argon auf Raumtemperatur abgekühlt.

Diskontinuierliche THF-Polymerisation

Die diskontinuierlichen Polymerisationsversuche wurden drucklos in 100 ml-Glaskolben mit Rückflußkühler unter einer Stickstoff-Atmosphäre durchgeführt. 10 g Katalysatorformkörper, die vor ihrer Verwendung zur Entfernung von adsorbiertem Wasser 18 Stunden lang bei 180°C/0,3 mbar getrocknet worden waren, wurden in 20 g Butandiolhaltigem THF (Butandiolkonzentration 2000 ppm) 24 Stunden lang auf 50°C erhitzt. Anschließend wurde dem Reak-

tionsgemisch wasserhaltiges THF (1 % $H_2O$) zugegeben und der Katalysator durch Filtration abgetrennt. Nach dreimaligem Waschen des Katalysator mit je 20 g THF wurden die Filtrate vereinigt und bei 70°C/20 mbar am Rotationsverdampfer und anschließend noch 30 min bei 150°C/0,3 mbar im Kugelrohr eingeengt. Als Destillationsrückstand anfallendes PTHF wurde ausgewogen und mittels Gel-Permeations-Chromatographie (GPC) analysiert. Die Tabelle 1 faßt die an den Katalysatoren A bis K erhaltenen Versuchsergebnisse zusammen.

Die Dispersität D als Maß für die Molekulargewichtsverteilung der gemäß den Beispielen hergestellten Polymeren wurde aus dem Verhältnis von Gewichtsmittel des Molekulargewichts ($M_w$) und Zahlenmittel des Molekulargewichts ($M_n$) nach der Gleichung

$$D = M_w / M_n$$

errechnet. Mw und Mn wurden mittels GPC bestimmt, wobei ein standardisiertes Polystyrol zur Eichung verwendet wurde. Aus den erhaltenen Chromatogrammen wurde das Zahlenmittel Mn nach der Gleichung

$$M_n = \Sigma \, c_i \, / \, \Sigma \, (c_i \, / \, M_i)$$

und das Gewichtsmittel Mw nach der Gleichung

$$M_w = (\Sigma \, (c_i * M_i)) \, / \, \Sigma \, ci$$

berechnet, in der $c_i$ für die Konzentration der einzelnen Polymerspecies i im erhaltenen Polymergemisch steht und in der $M_i$ das Molekulargewicht der einzelnen Polymerspecies i bedeutet.

Tabelle 1

| Beispiel | Katalysator | Katalysatorvorbehandlung | Ausbeute [%] | $M_n$ (GPC) | D (GPC) |
|---|---|---|---|---|---|
| 1 (Vergleich) | A | - | 29 | 6680 | 2,7 |
| 2 | B | $H_2$ | 44 | 9710 | 2,8 |
| 3 | C | $H_2$ | 38 | 7260 | 2,6 |
| 4 (Vergleich) | D | $H_2$ | 30 | 7680 | 2,6 |
| 5 (Vergleich) | E | - | 18 | 5580 | 2,5 |
| 6 | F | $H_2$ | 21 | 3970 | 2,4 |
| 7 (Vergleich) | G | - | 36 | 6850 | 3,9 |
| 8 | H | $H_2$ | 39 | 6870 | 3,7 |
| 9 (Vergleich) | I | - | 30 | 9090 | 3,6 |
| 10 | K | $H_2$ | 33 | 9300 | 3,7 |

In allen Fällen zeigen die durch Reduktion aktivierten Katalysatoren eine signifikante Ausbeuteerhöhung gegenüber den nicht reduzierten Katalysatoren und gegenüber dem Katalysator aus Vergleichsversuch 4, bei dem Wasserstoff durch Stickstoff ersetzt worden war. Dieser Vergleichsversuch 4 zeigt, daß der Effekt der Aktivierung nicht nur durch eine weitere thermische Nachbehandlung des Katalysators erzielt wird, sondern durch die Behandlung mit einem Reduktionsmittel.

Das zahlenmittlere Molekulargewicht des erhaltenen PTHFs bleibt im wesentlichen unbeeinflußt. Schwankungen dieses Wertes innerhalb der beobachteten Bereiche können einfach durch Anpassung des Telogengehalts ausgeglichen werden, wo dies gewünscht ist. Die Dispersion, also die Breite der erhaltenen Molekulargewichtsverteilung, die ein wichtiges Maß für die Qualität des Polymerisationsverfahrens und die Eigenschaften des erhaltenen Polymers ist, wird durch die Aktivierung des Katalysators nicht in signifikanter Weise verändert.

Die Beispiele zeigen, daß die erfindungsgemäßen Katalysatoren durch ihre signifikant gesteigerte Aktivität zu einer erheblich verbesserten Wirtschaftlichkeit des Verfahrens führen.

**Patentansprüche**

1.  Verfahren zur Herstellung von Polytetrahydrofuran, Copolymeren aus Tetrahydrofuran und 2-Butin-1,4-diol, Diestern dieser Polymere mit $C_2$- bis $C_{20}$-Monocarbonsäuren oder Monoestern dieser Polymere mit $C_1$- bis $C_{10}$- Monocarbonsäuren durch die Polymerisation von Tetrahydrofuran in Gegenwart eines der Telogene Wasser, 1,4-Butandiol, 2-Butin-1,4-diol, Polytetrahydrofuran eines Molekulargewichts von 200 bis 700 Dalton, einer $C_1$- bis $C_{10}$-Monocarbonsäure oder eines Carbonsäureanhydrids aus $C_2$- bis $C_{20}$-Monocarbonsäuren oder Gemischen dieser Telogene an einem heterogenen Trägerkatalysator, der eine katalytisch aktive Menge einer sauerstoffhaltigen Molybdän- und/oder Wolframverbindung auf einem oxidischen Trägermaterial enthält und der nach Aufbringung der Vorläuferverbindungen der sauerstoffhaltigen Molybdän- und/oder Wolframverbindungen auf den Trägermaterial-Vorläufer bei Temperaturen von 500°C bis 1000°C kalziniert worden ist, dadurch gekennzeichnet, daß man den Katalysator vor seinem Einsatz als Polymerisationskatalysator durch Behandlung mit einem Reduktionsmittel aktiviert.

2.  Verfahren nach Anspruch 1, dadurch gekennzeichnet, daß man als Reduktionsmittel ein Wasserstoff enthaltendes Gas verwendet.

3.  Verfahren nach Anspruch 2, dadurch gekennzeichnet, daß man als Reduktionsmittel ein Gemisch aus Wasserstoff und einem Inertgas verwendet.

4.  Verfahren nach Anspruch 3, dadurch gekennzeichnet, daß man als Inertgas Argon oder Stickstoff oder Gemische davon verwendet.

5.  Verfahren nach Anspruch 4, dadurch gekennzeichnet, daß man den Anteil an Wasserstoff im Gasgemisch im Verlauf der Reduktion verändert.

6.  Verfahren nach den Ansprüchen 1 bis 5, dadurch gekennzeichnet, daß man die Reduktion des Katalysators bei Temperaturen von 20 bis 500°C durchführt.

**Claims**

1.  A process for preparing polytetrahydrofuran, copolymers of tetrahydrofuran and 2-butyne-1,4-diol, diesters of these polymers with $C_2$-$C_{20}$-monocarboxylic acids or monoesters of these polymers with $C_1$-$C_{10}$-monocarboxylic acids by polymerization of tetrahydrofuran in the presence of one of the telogens water, 1,4-butanediol, 2-butyne-1,4-diol, polytetrahydrofuran having a molecular weight of from 200 to 700 Dalton, a $C_1$-$C_{10}$-monocarboxylic acid or an anhydride of a $C_2$-$C_{20}$-monocarboxylic acid or a mixture of these telogens over a heterogeneous supported catalyst which comprises a catalytically active amount of an oxygen-containing molybdenum and/or tungsten compound on an oxidic support material and which has been calcined at from 500°C to 1000°C after application of the precursor compounds of the oxygen-containing molybdenum and/or tungsten compounds onto the support material precursor, wherein the catalyst is activated by treatment with a reducing agent before it is used as a polymerization catalyst.

2.  A process as claimed in claim 1, wherein the reducing agent used is a hydrogen-containing gas.

3.  A process as claimed in claim 2, wherein the reducing agent used is a mixture of hydrogen and an inert gas.

4.  A process as claimed in claim 3, wherein the inert gas used is argon or nitrogen or a mixture thereof.

5.  A process as claimed in claim 4, wherein the proportion of hydrogen in the gas mixture is changed over the course of the reduction.

6.  A process as claimed in any of claims 1 to 5, wherein the reduction of the catalyst is carried out at from 20 to 500°C.

**Revendications**

1.  Procédé de préparation de polytétrahydrofurane, de copolymères de tétrahydrofurane et de 2-butyne-1,4-diol, de diesters de ces polymères avec des acides monocarboxyliques en $C_2$-$C_{20}$ ou de monoesters de ces polymères avec des acides monocarboxyliques en $C_1$-$C_{10}$, par polymérisation du tétrahydrofurane en présence d'un des télogènes que sont l'eau, le 1,4-butane-diol, le 2-butyne-1,4-diol, du polytétrahydrofurane ayant un poids moléculaire de 200 à 700 Dalton, un acide monocarboxylique en $C_1$-$C_{10}$ ou un anhydride carboxylique d'un acide mono-carboxylique en $C_2$-$C_{20}$ ou des mélanges de ces télogènes, sur un catalyseur hétérogène sur support, contenant une quantité catalytiquement active d'un composé oxygéné du molybdène et/ou du tungstène sur un matériau de support de type oxyde et qui est calciné à des températures de 500°C à 1000°C , après dépôt des composés précurseurs des composés oxygénés du molybdène et/ou du tungstène sur le précurseur du matériau de support, caractérisé en ce que l'on active le catalyseur par traitement avec un agent réducteur, avant son introduction en tant que catalyseur de polymérisation.

2. Procédé selon la revendication 1, caractérisé en ce que l'on utilise un gaz contenant de l'hydrogène en tant qu'agent réducteur.

3. Procédé selon la revendication 2, caractérisé en ce que l'on utilise un mélange d'hydrogène et d'un gaz inerte en tant qu'agent réducteur.

4. Procédé selon la revendication 3, caractérisé en ce que l'on utilise de l'argon ou de l'azote ou des mélanges de ceux-ci en tant que gaz inerte.

5. Procédé selon la revendication 4, caractérisé en ce que l'on modifie la proportion d'hydrogène dans le mélange de gaz au cours de la réduction.

6. Procédé selon l'une quelconque des revendications 1 à 5, caractérisé en ce que l'on mène la réduction du catalyseur à des températures de 20-500°C.